## Europäisches Patentamt
## European Patent Office
## Office européen des brevets

(19)

(11) Veröffentlichungsnummer: **0 134 425**
**B1**

(12) **EUROPÄISCHE PATENTSCHRIFT**

(45) Veröffentlichungstag der Patentschrift:
02.11.88

(51) Int. Cl.⁴: **G 02 B 6/24**

(21) Anmeldenummer: **84106540.2**

(22) Anmeldetag: **07.06.84**

(54) Lichtwellenleitersteckvorrichtung.

(30) Priorität: **10.06.83 DE 8317054 U**

(43) Veröffentlichungstag der Anmeldung:
**20.03.85 Patentblatt 85/12**

(45) Bekanntmachung des Hinweises auf die Patenterteilung:
**02.11.88 Patentblatt 88/44**

(84) Benannte Vertragsstaaten:
**CH DE FR GB LI**

(56) Entgegenhaltungen:
**DE-A-2 446 152**
**DE-A-3 121 870**
**FR-A-2 503 360**
**JP-A-54 050 203**
**JP-A-55 130 247**
**US-A-3 943 358**

**IBM TECHNICAL DISCLOSURE BULLETIN, Band 25,
Nr. 8, Januar 1983, Seiten 4095, 4096; G.A. SHEKITA:
"Fiber-Optic Connector with inherent wrap
capability"**

(73) Patentinhaber: **Siemens Aktiengesellschaft Berlin
und München, Wittelsbacherplatz 2, D-8000
München 2 (DE)**

(72) Erfinder: **Fink, Ludwig, Römerstrasse 30, D-8023
Pullach (DE)**
Erfinder: **Toussaint, Hans-Norbert, Dr.-Ing.,
Karlsbergstrasse 41, D-8000 München 71 (DE)**

## Beschreibung

Die Erfindung bezieht sich auf eine Lichtwellenleitersteckvorrichtung entsprechend dem Oberbegriff des Patentanspruches.

Eine solche Lichtwellenleitersteckvorrichtung ist aus der DE-A-3 121 870 bekannt und besteht im wesentlichen aus einer mittleren Führungshülse, in deren Durchgangsbohrung von der einen Seite her ein stiftförmiger Körper, der in einer konzentrischen Bohrung einen Lichtwellenleiterendabschnitt enthält, und von der anderen Seite her das Gehäuse einer LED eingeschoben werden kann. Bei geeigneter Bemessung dieser Teile erfolgt dabei eine Zwangsjustierung der Endfläche des Lichtwellenleiters auf den optisch aktiven Oberflächenbereich der LED, so daß das von der LED abgestrahlte Licht mit hohem Wirkungsgrad in den Lichtwellenleiter eingestrahlt wird.

Bei einer solchen, zur Verbindung eines optischen Senders mit einem Lichtwellenleiter vorgesehenen Lichtwellenleitersteckvorrichtung, ist es erwünscht, die von der LED abgegebene Strahlung zu überwachen, um z. B. beim Abfall der Strahlungsleistung unter einen vorgegebenen Wert einen Alarm auslösen zu können.

Aufgabe vorliegender Erfindung ist es daher, eine Lichtwellenleitersteckvorrichtung der eingangs genannten Art so weiterzubilden, daß ein Bauteil erhalten wird, das eine solche Überwachung ermöglicht und unkompliziert gehandhabt werden kann.

Erfindungsgemäß ergibt sich die Lösung dieser Aufgabe durch eine den kennzeichnenden Merkmalen des Patentanspruches entsprechende Ausbildung einer solchen Lichtwellenleitersteckvorrichtung.

Dadurch wird vorteilhaft ein Bauteil erhalten, bei dem durch das Einarbeiten einer weiteren Bohrung ein Steckerstift einer handelsüblichen Lichtwellenleitersteckvorrichtung unkompliziert so umgebaut ist, daß er zugleich zum Auskoppeln von Streulicht einer LED verwendet werden kann.

Zwar ist es schon aus der JP-A-55130 247, der JP-A-5 450 203, und der US-A-3 943 358 bekannt, das Ausscheiden eines Teils der von einer LED abgegebenen Strahlung durch eine neben einer Hauptfaser vorgesehene zusätzliche Faser zu bewirken, die eine Fotodiode speist.

Aus diesen Literaturstellen ist es jedoch allenfalls bekannt, Hauptfaser und zusätzliche Faser abschnittweise in einer gemeinsamen Hülle zu führen und dabei beide Fasern in ein und demselben Aufnahmekanal der Hülle unterzubringen. Dabei kann jedoch eine bevorrechtigte zentrale Position der Hauptfaser nicht ohne weiteres ungeschmälert erhalten werden, die für einen effektiven Abstransport möglichst der gesamten abgegebenen Strahlung erforderlich ist.

Demgegenüber bleibt bei der Lichtwellenleitersteckvorrichtung nach der Erfindung die genau zentrische Justierung der Hauptfaser gegenüber der Strahlungsquelle ohne weiteres voll erhalten.

Nachfolgend wird anhand von zwei Figuren ein Ausführungsbeispiel der Erfindung noch näher erläutert.

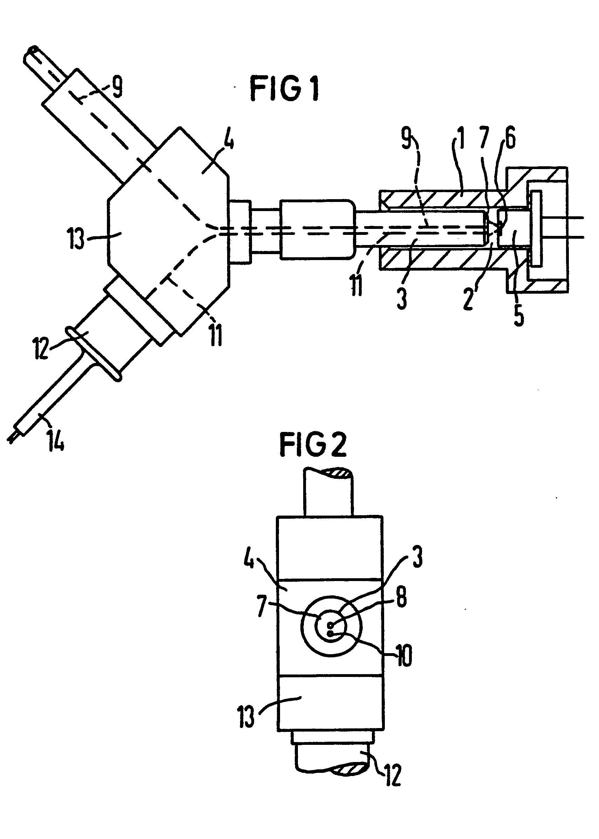

FIG 1 die Lichtwellenleitersteckvorrichtung in Seitenansicht und teilweise geschnitten dargestellt und

FIG 2 eine Ansicht von vorn auf die Steckvorrichtungshälfte, die mit den beiden Bohrungen zur Aufnahme zweier Lichtwellenleiter versehen ist.

Im einzelnen ist den Figuren zu entnehmen, daß die Lichtwellenleitersteckvorrichtung eine Führungshülse 1 aufweist, deren Durchgangsbohrung 2 auf der einen Seite zur Aufnahme eines stiftförmigen Abschnittes 3 einer Steckvorrichtungshälfte 4 dient, während von der anderen Seite her in die Durchgangsbohrung 2 der zylindrische Gehäusesockel 5 einer LED 6 eingeschoben werden kann.

Durch geeignete Aufeinander-Abstimmung der Abmessungen von Führungshülse 1, stiftförmigem Abschnitt 3 und Gehäusesockel 5 errfolgt durch das Einschieben der Teile 3 und 5 in die Führungshülse 1 zugleich eine Zwangsjustierung der optisch wirksamen Fläche der LED 6 auf die mit der Stirnseite 7 des stiftförmigen Abschnittes 3 planparallele Endfläche eines in einer konzentrischen Bohrung 8 des stiftförmigen Abschnittes 3 angeordneten Lichtwellen leiters 9, so daß das von der LED 7 abgestrahlte Licht möglichst optimal in den Lichtwellenleiter 9 eingekoppelt wird. Über den Lichtwellenleiter 9 erfolgt dann die Weiterleitung der von der LED abgegebenen optischen Signale.

Im stiftförmigen Abschnitt 3 ist neben der Bohrung 8, die den Lichtwellenleiter 9 enthält, eine weitere Bohrung 10 vorgesehen, und zwar in der Weise, daß sich die Mündung der Bohrung 10 auf der Stirnseite 7 des stiftformigen Abschnittes 3 möglichst unmittelbar neben der Mündung der Bohrung 8 befindet.

Auf diese Weise wird in eine mit der Stirnseite 7 des stiftförmigen Abschnittes 3 planparallele Endfläche eines in der weiteren Bohrung 10 angeordneten weiteren Lichtwellenleiters 11 von der LED 6 herrührendes Streulicht eingestrahlt.

Der Lichtwellenleiter 11 leitet dieses Streulicht einer Fotodiode oder einem Fototransistor 12 zu, der in einen Ansatz 13 eingebaut ist, welcher mit dem stiftförmigen Abschnitt 3 der Steckvorrichtungshälfte 4 verbunden ist.

Mit Hilfe der Fotodiode bzw. des Fototransistors 12 wird die von dem Lichtwellenleiter 11 transportierte Strahlung in eine dieser Strahlung proportionale elektrische Grösse (Strom bzw. Spannung) umgesetzt, die über ein Kabel 14 der Steckvorrichtungshälfte 4 entnommen werden kann.

Mit Hilfe der so gewonnenen elektrischen Größe kann nun die Strahlungsleistung der LED 6 geregelt werden bzw. es kann ein Absinken der Strahlungsleistung der LED 6 unter einen bestimmten Wert festgestellt und in einem solchen Fall z. B. ein Alarm ausgelöst werden.

## Patentanspruch

1. Lichtwellenleitersteckvorrichtung, bei der eine der beiden Steckvorrichtungshälften einen mit einer konzentrischen Bohrung (8) zur Aufnahme eines Lichtwellenleiterendabschnittes (9) versehenen Stift (3) aufweist und dieser Stift mit einer an einer Stirnseite (7) des Stiftes vorgesehenen Mündung der Bohrung (8) auf eine Lichtaustrittsfläche der anderen Steckvorrichtungs hälfte (1) justierbar ist, dadurch gekennzeichnet, daß der Stift (3) mit einer an der Stirnseite (7) des Stiftes (3) derart in der Nähe der Mündung der konzentrischen Bohrung (8) mündenden weiteren separten Bohrung (10) zur Aufnahme eines weiteren Lichtwellenleiters (11) versehen ist, daß bei der vorgesehenen Endposition des Stiftes (3), in bezug auf die andere Steckvorrichtungshälfte (1), Streulicht der Lichtaustrittsfläche in das stirnseitige Ende eines in der weiteren Bohrung (10) angeordneten Lichtwellenleiters (11) eingestrahlt wird, und daß der Stift (3) mit einer Halterung (13) verbuden ist, in der eine Fotodiode (12) oder ein Fototransistor (12) eingebaut ist, und daß der in der weiteren Bohrung (10) angeordnete Lichtwellenleiter (11) mit seinem anderen Ende auf eine fotoempfindliche Oberfläche der Fotodiode oder des Fototransistors ausgerichtet ist.

## Claim

1. A light-waveguide plug-in device in which one of the two halves of the plug-in device comprises a pin (3) provided with a concentric bore (8) which accommodates a light-waveguide end-section (9), which pin can be adjusted in relation to the light outlet surface of the other half (1) of the plug-in device by means of a mouth of the bore (8) located on an end-face (7) of the pin, characterised in that the pin (3) is provided with a further, separate bore (10) which accommodates a further light-waveguide (1), and which, at the end-face (7) of the pin (3), opens in the vicinity of the mouth of the concentric bore (8) in such manner that, in the provided end position of the pin (3), relative to the other half (1) of the plug-in device, scattered light from the light outlet surface is irradiated into the end-face of a light-waveguide (1) arranged in the further bore (10), and that the pin (3) is connected to a support (13) in which a photo-diode (12) or a photo-transistor (12) is incorporated, and that the other end of the light-waveguide (11), which is arranged in the further bore (10), is aligned towards a photo-sensitive surface of the photo-diode or photo-transistor.

## Revendication

1. Dispositif de connexion pour guides d'ondes optiques, dans lequel l'une des deux moitiés du dispositif de connexion comporte une broche (3) munie d'un perçage concentrique (8) servant à loger une section d'extrémité (9) d'un guide d'ondes optiques, et cette broche peut être ajustée, au moyen de l'embouchure du perçage (8) prévue dans une face frontale (7) de cette broche, sur une surface de sortie de la lumière de l'autre moitié (1) du dispositif de connexion, caractérisé par le fait que la broche (3) est munie d'un autre perçage séparé (10) qui sert a loger un autre guide d'ondes optiques (11) et débouche au niveau de la face frontale (7) de la broche (3) à proximité de l'embouchure du perçage concentrique (8) de telle sorte que, lorsque la broche (3) est dans la position finale prévue par rapport à l'autre moitié (1) du dispositif de connexion, une lumière diffuse provenant de la surface de sortie de la lumière est injectée dans l'extrémité frontale d'un guide d'ondes optiques (11) disposé dans l'autre perçage (10), et que la broche (3) est reliée à un support (13), dans lequel est montée une photodiode (12) ou un phototransistor (12), et que le guide d'ondes optiques (11) situé dans l'autre perçage (10) est aligné, par son autre extrémité, sur une surface photosensible de la photodiode ou du phototransistor.

FIG 1

FIG 2